# FASCICULE DE BREVET EUROPEEN

(11) **EP 1 408 522 B1**
(45) Date de publication et mention de la délivrance du brevet: **21.09.2011**
(21) Numéro de dépôt: 03300143.9
(22) Date de dépôt: 02.10.2003
(51) Int. Cl.: H01H 3/30, F16D 41/22, F16D 43/02

(54) **Dispositif d'accouplement roue libre pour commande à ressort de disjoncteur haute tension**
Freilaufkupplungsanordnung für Federantrieb für Hochspannungsleistungsschalter
Overrunning coupling assembly for spring motor for high voltage circuit breakers

(30) Priorité: 09.10.2002 FR 0212540
(43) Date de publication de la demande: 14.04.2004
(73) Titulaire: AREVA T&D SAS, 92084 Paris La Défense Cedex (FR)
(72) Inventeur: Von Allmen, Peter, 5033 Buchs AG (CH)
(74) Mandataire: Poulin, Gérard

(56) Documents cités:
- FR-A- 657 552
- FR-A- 1 434 962
- US-A- 4 762 971

## Description

L'invention concerne une commande mécanique pour disjoncteur haute tension ayant un dispositif d'accouplement de type roue libre interposé entre un moteur électrique et l'arbre d'enclenchement de la commande, le dispositif d'accouplement comprenant un premier et un second organe de friction montés coaxialement le long d'un arbre secondaire, ledit arbre secondaire pouvant être entraîné en rotation dans un sens prédéterminé par la détente d'un mécanisme à ressort agissant sur le dispositif, le second organe de friction pouvant tourner en roue libre autour dudit arbre secondaire dans ledit sens prédéterminé avec une vitesse de rotation inférieure à celle de l'arbre secondaire, ledit second organe de friction pouvant aussi être entraîné en rotation par le moteur dans ledit sens prédéterminé et devenir solidaire du premier organe de friction pour entraîner en rotation ledit arbre secondaire afin de réarmer ledit mécanisme à ressort.

Dans une telle commande, l'arbre d'enclenchement est mis en mouvement par le ressort qui est un ressort de fermeture, la mise en mouvement de l'arbre se faisant par l'intermédiaire d'une came. De cette manière, l'interrupteur est fermé en même temps qu'un ressort d'ouverture est tendu.

En fonctionnement, le système à ressort est réarmé après détente du ressort par mise en rotation du moteur, l'arbre d'enclenchement tournant dans le même sens de rotation prédéterminé lorsqu'il est entraîné par le moteur et lorsqu'il est entraîné par le mécanisme à ressort. Le dispositif d'accouplement de type roue libre est destiné à faire en sorte que la détente du mécanisme à ressort qui entraîne l'arbre d'enclenchement en rotation n'entraîne pas en rotation le moteur, ce qui ralentirait la vitesse de l'arbre d'enclenchement et par suite l'efficacité de la commande.

Dans les commandes connues, ce dispositif d'accouplement est généralement réalisé avec une roue libre classique, comme par exemple dans la demande de brevet US4762971. Dans cette demande de brevet, les deux organes de friction sont formés par deux bagues coaxiales entre lesquelles sont disposées des billes. Plus particulièrement, le premier organe de friction est une bague de faible diamètre qui est montée fixe sur l'arbre, et le second organe de friction est une bague de plus grand diamètre entourant la première bague, selon la disposition générale d'un roulement à bille classique. Chaque bille a une forme ovoïde et est maintenue dans une certaine position angulaire par un ressort de manière à être continûment en appui sur chaque organe de friction. Suivant le sens de rotation relatif des organes de friction que forment les bagues, les billes tendent à s'arc-bouter entre les deux bagues pour accoupler le dispositif, ou bien elles tendent à laisser glisser les bagues pour désaccoupler le dispositif.

Avec cette construction, un entretien régulier de la commande est nécessaire pour assurer son bon fonctionnement. Le fonctionnement correct d'un tel dispositif dépend beaucoup de son graissage : un graissage insuffisant peut conduire à une usure et au blocage du dispositif par grippage, ce qui ralentit la manoeuvre de fermeture du disjoncteur. D'un autre côté, un graissage excessif réduit le couple transmissible à travers le dispositif, ce qui ne permet pas au moteur de tendre le ressort de fermeture complètement. D'autre part, la pression élevée subie par les billes et leurs chemins de roulement rend indispensable l'utilisation de composants de haute qualité et de fabrication précise ce qui conduit à un coût de fabrication élevé. Ces éléments sont très sensibles à la surcharge, y compris à une surcharge durant un bref intervalle de temps.

Le but de l'invention est d'apporter une amélioration aux commandes existantes en proposant un dispositif d'accouplement de type roue libre sans entretien entre le moteur et l'arbre d'enclenchement.

A cet effet, l'invention a pour objet une commande mécanique de disjoncteur haute tension telle que définie par la revendication 1.

L'invention sera maintenant décrite plus en détail, et en référence au dessin annexé qui en illustre une forme de réalisation à titre d'exemple non limitatif.

La figure 1 est une représentation en coupe d'un exemple de réalisation d'un dispositif d'accouplement de type roue libre selon l'invention.

La figure 2 est une représentation en coupe d'un autre exemple de réalisation d'un dispositif d'accouplement de type roue libre selon l'invention.

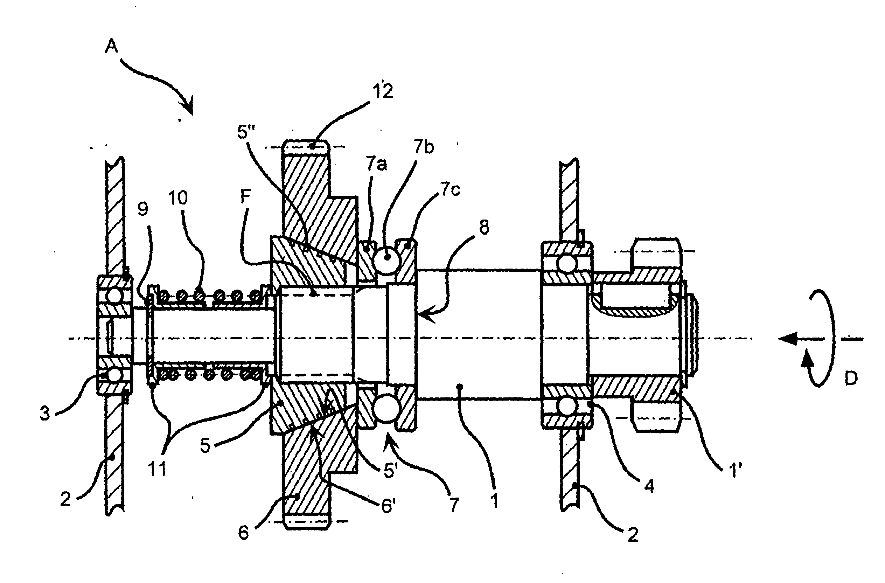

Dans l'exemple de la figure 1, un dispositif d'accouplement A de type roue libre comprend un arbre 1 monté rotatif sur un bâti de commande à ressort 2 au moyen de deux paliers à roulements à bille 3 et 4. Cet arbre 1 comprend à l'une de ses extrémités un pignon 1' qui est lié en mouvement à un arbre d'enclenchement de la commande non représenté. Un premier et un second organe de friction 5 et 6 sont montés sur l'arbre 1 de manière à l'entourer coaxialement en étant disposés en appui l'un contre l'autre le long de cet arbre. Le second organe de friction 6 est lié en mouvement à un moteur non représenté en vue de réarmer la commande en faisant tourner son arbre d'enclenchement par l'intermédiaire du dispositif d'accouplement A. Plus particulièrement, le premier organe de friction 5 est monté vissé sur un filetage F réalisé dans l'arbre 1, et le second organe de friction 6 est monté entre le premier organe de friction et une butée axiale de l'arbre en étant libre de tourner par rapport à l'arbre. Dans l'exemple de la figure, les deux organes de friction 5 et 6 sont sensiblement en appui l'un contre l'autre au niveau de surfaces de contact 5' et 6' qui ont ici des formes coniques complémentaires. La butée axiale comprend une butée à bille 7 qui entoure l'arbre 1 en étant en appui contre un épaulement 8 réalisé dans cet arbre. Cette butée à bille 7 est destinée à réduire les frottements entre le second organe de friction 6 et l'arbre 1 pour diminuer le couple résistant du dispositif lorsqu'il est dans un état désaccouplé (encore appelé état roue libre). Comme connu de l'état de la technique, une telle butée comprend deux bagues 7a, 7c de diamètres sensiblement identiques, entourant l'arbre 1 et espacées le long de celui-ci en étant séparées par des billes 7b. L'une des bagues 7c est par exemple frettée sur l'arbre, et l'autre bague 7a est libre de tourner par rapport à l'arbre y compris si un effort axial important lui est appliqué. Dans l'exemple de la figure, la butée à bille 7 qui apparaît pourrait aussi bien être une bague frettée sur l'arbre et réalisée dans un matériau présentant un faible coefficient de frottement afin que le second organe de friction 6 soit libre de tourner autour de l'arbre malgré la pression axiale de contact qu'il exerce sur la bague.

Selon l'invention, l'association de ces deux organes de friction 5 et 6 avec l'arbre 1 réalise un dispositif d'accouplement de type roue-libre : le premier organe de friction se déplace le long de l'arbre 1 sur une faible course en se vissant en direction de la butée à bille 7 ou en se dévissant le long de l'arbre dans la direction opposée à la butée à billes 7 selon qu'il est respectivement soit entraîné en rotation par le second organe de friction pour être accouplé à l'arbre soit désacoupplé de l'arbre lorsque ce second organe présente un couple résistant par rapport à l'arbre.

Partant d'un état désaccouplé du dispositif, lorsque le second organe de friction 6 est entraîné en rotation dans le sens prédéterminé indiqué par D dans la figure, il entraîne en rotation le premier organe 5 par effet de friction. Ce premier organe de friction 5 se visse alors le long de l'arbre et en se déplaçant en direction de la butée à bille 7 exerce une pression axiale sur le second organe 6 qui est en appui contre la butée axiale. Ce second organe 6 bloque alors le déplacement du premier organe 5 ce qui fait croître la pression de contact donc les frottements entre ces deux organes de sorte que ces derniers deviennent à un certain moment solidaires en rotation. Dans cette situation, le second organe de friction entraîne alors en rotation l'arbre 1 par l'intermédiaire du premier organe de friction, ce qui correspond à un état accouplé du dispositif.

Dans un état accouplé du dispositif, le second organe de friction 6 exerce un couple moteur sur l'arbre 1 en étant entraîné en rotation par un organe moteur (non représenté sur cette figure) et l'arbre est ainsi entraîné en rotation par le second organe dans le sens prédéterminé D. Partant de cet état, si le second organe 6 cesse d'exercer un couple moteur et exerce au contraire un couple résistant à la rotation de l'arbre, ce second organe tend par effet de friction à dévisser le premier organe de friction 5 le long de l'arbre. Ceci a pour effet d'éloigner quelque peu le second organe du premier organe selon la direction axiale et de diminuer ainsi la pression de contact entre les deux organes de friction de sorte qu'ils se désolidarisent en rotation. Ceci correspond à un état désaccouplé du dispositif dans lequel le second organe de friction tourne en roue libre autour de l'arbre 1.

Plus particulièrement, le dispositif est agencé pour que la course du premier organe de friction 5 le long de l'arbre 1 soit la plus faible possible de sorte qu'il reste en permanence sensiblement en appui contre le second organe de friction 6. Ainsi, les étapes d'accouplement et de désaccouplement sont facilitées par la présence permanente d'un faible couple de friction minimal entre ces deux organes. En état désaccouplé le dispositif laisse le second organe de friction libre de tourner autour dudit arbre dans ledit sens prédéterminé D avec une vitesse de rotation inférieure à celle de l'arbre.

Contrairement aux roues libres existantes telles que les roues libres à bille, le graissage n'est pas nécessaire puisque les fonctions de l'accouplement sont assurées par des organes de friction dont on attend qu'il présentent un coefficient de frottement élevé. Avantageusement, le premier et le second organe de friction auront des surfaces de contact 5' et 6' réalisées dans des matériaux adaptés pour présenter un coefficient de frottement suffisamment élevé. Comme connu de l'état de la technique le couple de matériau choisi pourra par exemple être le couple acier/acier, ou bien acier/matière plastique.

Les surfaces de contact 5' et 6' des deux organes de friction peuvent être choisies pour former par exemple des disques perpendiculaires à l'arbre, comme pour un embrayage ou bien présenter d'autres formes. Dans l'exemple de la figure 1, les surfaces de friction 5' et 6' présentent des surfaces coniques complémentaires, ce qui permet d'ajuster la valeur de la pente du cône en fonction du coefficient de frottement des deux surfaces de friction 5' et 6'. Plus particulièrement, pour un même coefficient de frottement, un cône plus fermé favorisera la transmission d'un couple important par le dispositif selon l'invention.

Comme visible dans la figure 1, le premier organe de friction 5 a une forme globalement conique convexe, avec un alésage central fileté qui est vissé dans le filetage F de l'arbre. Le second organe de friction 6 comprend un alésage conique central qui forme la surface de contact 6'. Un avantage supplémentaire procuré par des surfaces de contact 5' et 6' coniques complémentaires est de mettre en oeuvre un montage dans lequel le second organe de friction entoure sensiblement le premier organe de friction. Ainsi, le second organe de friction est centré sur l'arbre par l'intermédiaire du premier organe de friction, de sorte qu'il n'est pas nécessaire de prévoir un roulement à billes ou un dispositif de centrage, ce qui réduit significativement le coût de la commande selon l'invention. Plus particulièrement, lorsque le dispositif A est accouplé, le second organe de friction 6 est comprimé entre la surface conique 5' du premier organe de friction et la butée axiale 7, ce qui le centre précisément par rapport à l'arbre 1. Lorsque le dispositif est désaccouplé, le premier organe de friction 5 est quelque peu éloigné de la butée axiale 7 de sorte que le second organe de friction 6 est maintenu entre le cône 5' et la butée axiale 7 avec un léger jeu fonctionnel axial. Dans cette situation, le second organe de friction 6 est libre de tourner en glissant sur la surface conique 5' grâce à ce léger jeu fonctionnel axial. La surface périphérique du premier organe de friction pourra avantageusement comprendre des gorges périphériques 5" destinées à absorber d'éventuelles poussières produites par le frottement des surfaces de contact 5' et 6' des deux organes de friction 5 et 6.

Selon l'invention, le premier organe de friction qui est vissé sur l'arbre 1 a sa course axiale limitée par une autre butée axiale 9 de l'arbre 1 de manière à réduire sa course le long de l'arbre lorsque le dispositif est désaccouplé. Avantageusement, un ressort hélicoïdal 10 est monté entre cette autre butée 9 et le premier organe de friction 5 de manière à maintenir le premier et le second organe de friction 5 et 6 toujours sensiblement en appui l'un contre l'autre y compris lorsque le dispositif est désaccouplé. Le jeu fonctionnel axial du second organe de friction est ainsi réduit au minimum, de sorte que le dispositif est capable de se réaccoupler rapidement, ce qui améliore sa fiabilité de fonctionnement. Plus particulièrement, dans l'exemple de la figure, l'autre butée axiale 9 est réalisée avec un circlip monté autour d'une gorge périphérique de l'arbre 1, et le ressort 10 est monté sur deux douilles 11 qui entourent l'arbre 1 en étant disposé entre le circlip et le premier organe de friction 5.

Pour améliorer encore la fiabilité de fonctionnement, le filetage F sera réalisé avec un pas de grande valeur. Avantageusement, le pas du filetage F a une valeur suffisante pour former une liaison hélicoïdale réversible de telle sorte que le ressort plaque continûment le premier organe de friction sensiblement en appui contre le second. La valeur de ce pas pourra être choisie proche de la valeur du diamètre de l'arbre 1 au niveau du filetage avec éventuellement plusieurs filets. Plus particulièrement, des essais ont montré qu'avec un filetage F ayant quatre filets avec un pas de 20 mm par tour, pour un diamètre d'arbre de 24 mm, l'accouplement du dispositif est réalisé dans des conditions optimales.

Dans l'exemple de la figure 1, le second organe de friction 6 comprend une denture d'engrenage périphérique 12, dans laquelle est engrené un pignon d'arbre moteur non représenté, de telle sorte que ce second organe est directement lié en mouvement avec le moteur. Le dispositif d'accouplement A est ici lié en mouvement avec l'arbre d'enclenchement non représenté par l'intermédiaire du pignon 1' monté en extrémité de l'arbre 1. Le premier organe de friction 5 pourrait également comprendre une denture d'engrenage périphérique d'entraînement liée en mouvement avec l'arbre d'enclenchement pour jouer directement le rôle du pignon 1' de l'exemple de mode de réalisation donné dans la figure 1.

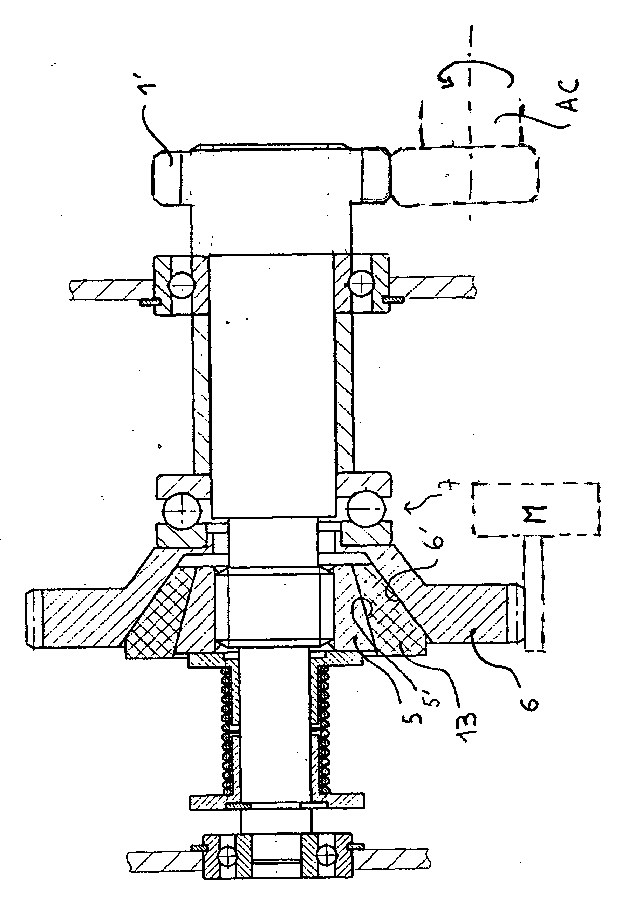

Sur la figure 2, le dispositif d'accouplement du type à roue libre selon l'invention comprend une bague conique 13 interposée entre les surfaces de contact coniques 5',6' des deux organes de friction 5 et 6. Cette bague conique 13 est réalisée en un matériau, comme un polyamide renforcé avec de la fibre de verre, ayant de bonnes caractéristiques d'absorption des chocs mécaniques qui s'établissent dans le dispositif d'accouplement entre l'arbre du moteur représenté sur cette figure par un bloc M et l'arbre d'enclenchement indiqué par AC. Cette bague conique 13 contribue également à réduire le bruit de fonctionnement du dispositif d'accouplement par rapport à celui montré sur la figure 1 ou les surfaces coniques 5' et 6' complémentaires des deux organes de friction sont directement en contact l'une avec l'autre. Comme visible sur la figure 2, la surface intérieure de la bague conique 13 qui est en contact avec la surface conique de friction 5' (pourvue ou non de gorges périphériques 5") de l'élément de friction 5 et la surface extérieure de la bague conique 13 qui est en contact avec la surface conique de friction 6' de l'élément de friction 6 sont inclinées de telle manière que la bague conique 13 est maintenue en place entre les deux surfaces coniques 5' et 6' sous l'action des forces axiales qui sont produites par les éléments de friction 5 et 6.

## Revendications

1. Commande mécanique de disjoncteur haute tension comprenant un dispositif d'accouplement (A) de type roue libre interposé entre un arbre rotatif d'enclenchement (AC) de la commande et un moteur électrique (M), le dispositif d'accouplement comprenant un premier organe de friction (5) lié en mouvement à l'arbre d'enclenchement et un second organe de friction lié en mouvement au moteur électrique, lesdits organes de friction étant montés coaxialement l'un par rapport à l'autre sur un arbre secondaire (1) de telle manière que lorsque l'arbre secondaire est entraîné en rotation dans un sens prédéterminé (D) par la détente d'un mécanisme à ressort de la commande, le second organe de friction (6) tourne en roue libre autour dudit arbre secondaire (1) dans ledit sens prédéterminé (D) avec une vitesse de rotation inférieure à celle de l'arbre secondaire (1) et lorsque ledit second organe de friction (6) est entraîné en rotation par le moteur dans ledit sens prédéterminé, il devient solidaire du premier organe de friction (5) pour entraîner en rotation ledit arbre secondaire (1) afin de réarmer ledit mécanisme à ressort, **caractérisé en ce que** le premier organe de friction (5) a une surface extérieure (5') de forme conique et comporte un alésage central vissé sur ledit arbre secondaire (1), **en ce que** le second organe de friction comporte une denture périphérique (12) d'engrenage avec le moteur et un alésage central à surface intérieure (6') conique qui entoure sensiblement la surface extérieure conique (5') du premier organe de friction, le premier et le second organe de friction étant agencés de telle manière que le premier organe de friction est apte à être déplacé sur une faible course axiale le long de l'arbre secondaire soit par vissage lorsqu'il devient solidaire en rotation dudit second organe (6) soit par dévissage lorsque ledit second organe tourne en roue libre autour dudit arbre secondaire (1), **en ce que** lesdits premier et second organes de friction (5, 6) restent en permanence sensiblement en appui l'un contre l'autre le long dudit arbre secondaire (1), **en ce que** ledit premier organe de friction (5) est apte à exercer lorsqu'il est vissé une pression sur ledit second organe de friction (6), et **en ce que** ledit second organe de friction (6) est apte à appuyer sous l'effet de ladite pression contre une butée axiale (7) de l'arbre secondaire (1) de façon à arrêter le déplacement par vissage dudit premier organe de friction (5) et entraîner ledit arbre secondaire en rotation solidairement avec ledit premier organe de friction (5).

2. Commande selon la revendication 1, dans laquelle ledit premier organe de friction (5) est maintenu sensiblement en appui contre ledit second organe de friction (6) par un ressort (10).

3. Commande selon la revendication 2, dans laquelle ledit premier organe de friction est monté vissé sur un filetage (F) réalisé dans l'arbre secondaire (1), ledit filetage étant réversible.

4. Commande selon l'une des revendications 1 à 3, dans laquelle ladite butée axiale est une butée à billes (7).

5. Commande selon l'une des revendications 1 à 4, dans laquelle ledit premier organe de friction (5) est muni d'une denture d'engrenage périphérique couplée avec ledit arbre d'enclenchement.

6. Commande selon l'une des revendications 1 à 5, dans laquelle une bague conique (13) est interposée entre les deux surfaces coniques desdits organes de friction (5,6).

7. Commande selon l'une des revendications 1 à 6, dans laquelle le premier organe de friction (5) a une surface extérieure conique (5') formant des gorges périphériques (5") prévues pour l'absorption de la poussière.

8. Commande selon la revendication 6, dans laquelle la bague conique (13) est en polyamide renforcé avec de la fibre de verre.

9. Commande selon la revendication 3, dans laquelle le filetage (F) possède quatre filets avec un pas d'environ 20 mm par tour, pour un diamètre d'arbre secondaire sensiblement égal 24 mm.

## Claims

1. Operating mechanism for a high-voltage circuit-breaker comprising a coupling device (A) of the overrunning type disposed between a trigger shaft (AC) of the operating mechanism and an electrical motor (M), the coupling device comprising a first friction member (5) linked in motion with the trigger shaft and a second friction member (6) linked in motion with the electrical motor, said friction members being mounted coaxially to each other on a secondary shaft (1) so that when said secondary shaft rotates in a predetermined direction (D) when a spring-loaded mechanism of the operating mechanism relaxes, it is possible for the second friction member (6) to overrun about said secondary shaft (1) in said predetermined direction (D) at a speed of rotation that is lower than the speed of rotation of the secondary shaft (1), and when said second friction member (6) is rotated by the motor in said predetermines direction, it becomes constrained to rotate with the first friction member (5) for driving in rotation said secondary shaft (1) so as to recock said spring-loaded mechanism,
**characterized in that** said first friction member (5) has an outer surface (5') of conical shape and comprises a central bore screwed onto said secondary shaft (1), **in that** the second friction member (6) comprises a peripheral set of teeth (12) meshing with the motor and a central bore with an inner conical surface (6') which substantially surrounds the outer conical surface (5') of said first friction member, said first and second friction members being designed so that said first friction member is suitable for being moved over a short axial stroke along the secondary shaft either by being screwed when it becomes constrained to rotate with the second member (6) or by being unscrewed when said member overruns about said secondary shaft (1), **in that** said first and second friction members (5, 6) remain continuously substantially in abutment one against the other along said secondary shaft (1), **in that** said first friction member (5) is suitable for acting when it is screwed to exert a pressure on said second friction member (6), and **in that** said second member (6) is suitable for acting under the effect of said pressure to press against an axial abutment (7) on the secondary shaft (1) so as to stop said first friction member (5) moving by being screwed, and so as to rotate said secondary shaft by constraining it to rotate with said first friction member (5).

2. Operating mechanism according to claim 1, in which said first friction member (5) is held substantially in abutment against said second friction member (6) by a spring (10).

3. Operating mechanism according to claim 2, in which said first friction member is screwed onto a thread (F) formed on the shaft (1), said thread being reversible.

4. Operating mechanism according to any one of claims 1 to 3, in which said axial abutment is a ball-bearing abutment (7).

5. Operating mechanism according to any one of claims 1 to 4, in which said first friction member (5) is provided with a peripheral set of teeth (12) meshed with said trigger shaft.

6. Operating mechanism according to any one of claim 1 to 5, in which a conical ring (13) is disposed between the two conical surfaces of said friction members (5, 6).

7. Operating mechanism according to any ane of claims 1 to 6, in which the first member (5) has an outer conical surface (5') which is provided with peripheral grooves (5") serving to absorb dust.

8. Operating mechanism according to claim 6, in which the conical ring (13) is made with polyamide reinforced with glass fiber.

9. Operating mechanism according to claim 3, in which the thread (F) has flour starts with a pitch of about 20 mm per turn, and the secondary shaft has a diameter of about 24 mm.

## Patentansprüche

1. Mechanische Steuerung für einen Hochspannungs-Leistungsschalter, umfassend eine Kupplungsvorrichtung (A) vom Freilauftyp, die zwischen einer Einschalt-Drehwelle (AC) der Steuerung und einem Elektromotor (M) eingefügt ist, wobei die Kupplungsvorrichtung ein erstes Reibungsorgan (5) umfasst, das zur Bewegung mit der Einschaltwelle verbunden ist, sowie ein zweites Reibungsorgan, das zur Bewegung mit dem Elektromotor verbunden ist, wobei die Reibungsorgane koaxial zueinander auf einer Sekundärwelle (1) derart montiert sind, dass dann, wenn die Sekundärwelle durch die Entspannung eines Federmechanismus der Steuerung zur Drehung in einer vorbestimmten Richtung (D) angetrieben wird, sich das zweite Reibungsorgan (6) im Freilauf in der vorbestimmten Richtung (D) mit einer Drehgeschwindigkeit um die Sekundärwelle (1) dreht, die kleiner als jene der Sekundärwelle (1) ist, und wenn das zweite Reibungsorgan (6) durch den Motor zur Drehung in der vorbestimmten Richtung angetrieben wird, es mit dem ersten Reibungsorgan (5) verbunden wird, um die Sekundärwelle (1) zur Drehung anzutreiben mit dem Ziel, den Federmechanismus wieder zu spannen, **dadurch gekennzeichnet, dass** das erste Reibungsorgan (5) eine äußere Oberfläche (5') mit konischer Form hat und eine zentrale Bohrung umfasst, die auf die Sekundärwelle (1) geschraubt ist, dass ferner das zweite Reibungsorgan eine Umfangsverzahnung (12) zum Eingriff mit dem Motor sowie eine zentrale Bohrung mit einer konischen inneren Oberfläche (6') umfasst, die im Wesentlichen die konische äußere Oberfläche (5') des ersten Reibungsorgans umgibt, wobei das erste und das zweite Reibungsorgan dazu ausgelegt sind, dass das erste Reibungsorgan über einen geringen axialen Weg entlang der Sekundärwelle verlagert werden kann, und zwar entweder durch Festschrauben, wenn es mit dem zweiten Organ (6) zur Drehung verbunden wird, oder durch Losschrauben, wenn sich das zweite Organ im Freilauf um die Sekundärwelle (1) herum dreht, dass ferner das erste und das zweite Reibungsorgan (5, 6) ständig im Wesentlichen in Anlage gegeneinander entlang der Sekundärwelle (1) bleiben, dass ferner das erste Reibungsorgan (5), wenn es festgeschraubt ist, einen Druck auf das zweite Reibungsorgan (6) ausüben kann, und dass das zweite Reibungsorgan (6) unter der Wirkung dieses Drucks gegen einen axialen Anschlag (7) der Sekundärwelle (1) derart drücken kann, dass die durch Festschrauben bewirkte Verlagerung des ersten Reibungsorgans (5) gestoppt wird und die Sekundärwelle verbunden mit dem ersten Reibungsorgan (5) zur Drehung angetrieben wird.

2. Steuerung nach Anspruch 1, bei der das erste Reibungsorgan (5) durch eine Feder (10) im Wesentlichen in Anlage gegen das zweite Reibungsorgan (6) gehalten wird.

3. Steuerung nach Anspruch 2, bei der das erste Reibungsorgan auf ein Gewinde (F) festgeschraubt montiert ist, welches in der Sekundärwelle (1) vorgesehen ist, wobei das Gewinde reversibel ist.

4. Steuerung nach einem der Ansprüche 1 bis 3, bei der der axiale Anschlag ein Kugellager (7) ist.

5. Steuerung nach einem der Ansprüche 1 bis 4, bei der das erste Reibungsorgan (5) mit einer Umfangsverzahnung zum Eingriff ausgestattet ist, die mit der Einschaltwelle gekoppelt ist.

6. Steuerung nach einem der Ansprüche 1 bis 5, bei der ein konischer Ring (13) zwischen den zwei konischen Oberflächen der Reibungsorgane (5, 6) eingefügt ist.

7. Steuerung nach einem der Ansprüche 1 bis 6, bei der das erste Reibungsorgan (5) eine konische äußere Oberfläche (5') hat, die Umfangskehlen (5") bildet, welche zur Absorption von Staub vorgesehen sind.

8. Steuerung nach Anspruch 6, bei der der konische Ring (13) aus einem mit Glasfaser verstärkten Polyamid hergestellt ist.

9. Steuerung nach Anspruch 3, bei der das Gewinde (F) vier Gewindegänge mit einer Ganghöhe von ungefähr 20 mm pro Umdrehung besitzt, für einen Durchmesser der Sekundärwelle im Wesentlichen gleich 24 mm.
